# EUROPÄISCHE PATENTANMELDUNG

(11) **EP 4 760 362 A1**
(43) Veröffentlichungstag der Anmeldung: **17.06.2026**
(21) Anmeldenummer: 25221701.3
(22) Anmeldetag: 09.12.2025
(51) Int. Cl.: G02B 5/136, G02B 5/08, G21K 1/30, G02B 5/124

(54) **LICHTREFLEKTORELEMENT UND ATOMGERÄT**

(30) Priorität: 10.12.2024 DE 102024136843
(71) Anmelder: Deutsches Zentrum für Luft- und Raumfahrt e.V., 53227 Bonn-Oberkassel (DE)
(72) Erfinder: Schubert, Christian, 30167 Hannover (DE); Herr, Waldemar, 30625 Hannover (DE); Grauer, Vanessa Annabelle, 37269 Eschwege (DE)
(74) Vertreter: Günther, Constantin

(57) **Zusammenfassung**

Lichtreflektorelement das mehrere Reflektorflächen hat, die in verschiedenen vordefinierten Winkeln bezüglich einer vordefinierten Lichteinstrahlrichtung des Lichtreflektorelements ausgerichtet sind, wobei die Reflektorflächen um ein Zentrum des Lichtreflektorelements z.B. ringförmig, angeordnet sind, wobei jeweilige Paare voneinander zugeordneten Reflektorflächen bezüglich des Zentrums des Lichtreflektorelements einander diametral gegenüberliegend angeordnet sind, sodass in Lichteinstrahlrichtung einstrahlendes Licht durch die Reflektorflächen in Lichtstrahlen abgelenkt wird, die in unterschiedlichen Raumrichtungen aufeinander zu verlaufen und sich in einer Zentrumsachse treffen, die in Lichteinstrahlrichtung durch das Zentrum hindurch verläuft, dadurch gekennzeichnet, dass das Lichtreflektorelement ein oder mehrere Paare der einander zugeordneten Reflektorflächen hat, bei denen eine Reflektorfläche des Paares bezüglich der vordefinierten Lichteinstrahlrichtung des Lichtreflektorelements in einem Winkel im Bereich von 46° bis 89° ausgerichtet ist und die andere Reflektorfläche desselben Paares bezüglich der vordefinierten Lichteinstrahlrichtung des Lichtreflektorelements in einem Winkel im Bereich von 1° bis 44° ausgerichtet ist.

## Beschreibung

Die Erfindung betrifft ein Lichtreflektorelement, das mehrere Reflektorflächen hat, die in verschiedenen vordefinierten Winkeln bezüglich einer vordefinierten Lichteinstrahlrichtung des Lichtreflektorelements ausgerichtet sind, wobei die Reflektorflächen z.B. ringförmig um ein Zentrum des Lichtreflektorelements angeordnet sind, wobei jeweilige Paare von einander zugeordneten Reflektorflächen bezüglich des Zentrums des Lichtreflektorelements einander diametral gegenüberliegend angeordnet sind, sodass in Lichteinstrahlrichtung einstrahlendes Licht durch die Reflektorflächen in Lichtstrahlen abgelenkt wird, die in unterschiedlichen Raumrichtungen aufeinander zu verlaufen und sich in einer Zentrumsachse treffen, die in Lichteinstrahlrichtung durch das Zentrum hindurch verläuft. Die Zentrumsachse ist somit parallel zur Lichteinstrahlrichtung ausgerichtet. Es können sich dabei die durch die Reflektorflächen abgelenkten Lichtstrahlen mehrerer oder aller Reflektorflächen an demselben Punkt der Zentrumsachse treffen, der dann eine Wechselwirkungszone zum Kühlen gefangener Atome bildet.

Die Erfindung betrifft außerdem ein Atomgerät, z.B. ein Atominterferometer oder ein Quanten-Gradiometer, mit wenigstens einem solchen Lichtreflektorelement. Allgemein betrifft die Erfindung das Gebiet beliebiger Atomgeräte mit Atomfalle und in der Atomfalle lasergekühlten Atomen, insbesondere mit magnetooptischer Falle (MOT - magneto-optical trap). Insbesondere betrifft die Erfindung atominterferometrische Gravimeter sowie damit gebildete Gradiometer.

Atominterferometrische Gravimeter bieten langzeitstabile, absolute Schweremessungen. Ihr Messprinzip bietet im Vergleich zu den verbreiteten Lasergravimetern (FG5X) die Möglichkeit quasikontinuierlicher Datenaufnahme über einen längeren Zeitraum sowie die Perspektive einer höheren Genauigkeit. Es wurden bereits transportable und kommerzielle Geräte basierend auf atominterferometrischen Messungen realisiert, sowie auch auf einer mobilen Plattform wie einem Schiff betrieben. Ein wesentlicher Bestandteil eines atominterferometrischen Gravimeters ist die Quelle für kalte Atome. Typischerweise basieren diese auf Laserkühlung in magnetooptischen Fallen und Polarisationsgradientenkühlung. Eine dreidimensionale magnetooptische Falle benötigt neben Magnetfeldern auch Lichtfelder, die typischerweise auf den drei Raumachsen jeweils anti-parallel oder nahezu anti-parallel eingestrahlt werden, um eine sogenannte Wechselwirkungszone zum Kühlen gefangener Atome zu bilden. Dies impliziert einen vergleichsweise komplexen Aufbau mit mehreren Strahlformungsoptiken und entsprechenden optischen Zugängen zum Vakuumsystem, in dem die Atome gefangen und gekühlt werden. Speziell ausgelegte Pyramiden- oder Gitterstrukturen wurden erfolgreich dafür verwendet, aus einem einzigen einfallenden Laserstrahl eine Strahlgeometrie zu schaffen, die effektiv in allen drei Raumachsen kühlen kann.

Eine weitere wichtige Anwendung von Atominterferometern ist deren Verwendung für Gradiometer, bei denen zwei räumlich getrennte Gravimeter gleichzeitig betrieben werden. Aus dem Differenzsignal lässt sich die erste Ableitung der Schwerkraft ableiten, der Gravitationsgradient. Für das Differenzsignal ergibt sich eine gemeinsame Rauschunterdrückung (common-noise rejection), bei der das Gradiometersignal nur von technischen Rauschquellen verschlechtert wird, die unterschiedlich auf die beiden Gravimeter wirken. Dabei ist von besonderer Bedeutung, dass die beiden Gravimeter möglichst symmetrisch betrieben werden, um maximal von der beschriebenen Rauschunterdrückung zu profitieren.

Der Stand der Technik in der Gradiometrie mit kompakten Atominterferometern wird durch die Veröffentlichung WO 2014/106811 A2 gut beschrieben. Das dortige Gradiometer besteht aus zwei (oder drei) Wechselwirkungszonen, bei denen jeweils Laserlicht aus allen sechs Raumrichtungen auf ein atomares Ensemble gerichtet wird. Es wird hierzu ein einzelner Laserstrahl eingesetzt, der von zwei (bzw. drei) Lichtreflektorelementen jeweils auf die Wechselwirkungszonen gerichtet wird. Die beiden Lichtreflektorelemente sind so arrangiert, dass das zweite Lichtreflektorelement hinter einer zentralen Bohrung des ersten Lichtreflektorelements liegt (bzw. das dritte Lichtreflektorelement eine zentrale Bohrung für das zweite Lichtreflektorelement hat).

Die technische Herausforderung, die Beschleunigungsmessungen mit kalten Atomen darstellen, ist die Umsetzung von kompakten und widerstandsfähigen Geräten, um trotz anspruchsvoller und dynamischer Umgebungsbedingungen zuverlässige Messdaten zu generieren und hohe Sensitivitäten beizubehalten. Insbesondere für gradiometrische Messungen rücken diese Aspekte aktuell mehr in den Vordergrund und die Anforderungen an die Sensorik hierbei sind hoch.

Aktuelle Umsetzungen zum Kühlen und Fangen der Atomwolken für den späteren Interferometrieprozess beinhalten verschiedene Pyramidenspiegel oder Gitterkonfigurationen der 3-dimensionalen-magnetooptischen Falle (3D-MOT). Diese Arten von 3D-MOTs haben dazu beigetragen, dass Aufbauten für Atominterferometer kompakter sind, da dadurch nur ein Laserstrahl benötigt wird bzw. die Anzahl an notwendigen optischen Zugängen und Fasern deutlich reduziert wird. Die optischen Elemente dazu sind jedoch aufwändig in der Herstellung und können die Notwendigkeit für weitere Elemente im Aufbau implizieren, die zu ungewollten Polarisationseffekten oder Phasenstörungen führen können. Eine Herausforderung dabei ist die gleichmäßige Intensitätsverteilung des Laserlichts in allen drei Raumachsen für die 3D-magnetooptische Falle und Melassekühlung. Diese ist jedoch von großer Bedeutung, da eine ungleiche Verteilung des Lichts die Leistungsfähigkeit der implementierten Laserkühlung beeinflusst und damit die Leistungsfähig des Sensors insgesamt degradieren kann.

Aktuelle Umsetzungen von Pyramiden-MOTs sind meist so konstruiert, dass sie vier der sechs zum effektiven Kühlen nötigen Raumrichtungen durch reflektierende Flächen beleuchten. Die restlichen beiden Richtungen werden jeweils durch das einfallende und in sich reflektierte Laserlichtfeld abgedeckt.

Die typischen Varianten mit Reflexion in einem 90°-Winkel benötigen einen Liquid Crystal Variable Retarder (LCVR) im Retroreflexpfad zum Schalten zwischen MOT-Phase und Interferometriephase bzw. Detektionsphase während des Interferometriezyklus, wenn ein für die Detektion günstiger Energieübergang im Atom getrieben werden soll (z.B. ein sogenannter geschlossener Übergang).

Ein weiterer Nachteil ist, dass das Zentrum des Pyramidenelements ausgeleuchtet werden muss, was potentiell den Betrieb von verschachtelten Interferometern oder anderen Messmethoden mit lasergekühlten Atomen stören kann.

Der Erfindung liegt somit die Aufgabe zugrunde, ein verbessertes Lichtreflektorelement und ein damit gebildetes Atomgerät anzugeben.

Diese Aufgabe wird gemäß Anspruch 1 durch ein Lichtreflektorelement der eingangs genannten Art gelöst, wobei das Lichtreflektorelement ein oder mehrere Paare der einander zugeordneten Reflektorflächen hat, bei denen eine Reflektorfläche des Paares bezüglich der vordefinierten Lichteinstrahlrichtung des Lichtreflektorelements in einem Winkel im Bereich von 46° bis 89° ausgerichtet ist und die andere Reflektorfläche desselben Paares bezüglich der vordefinierten Lichteinstrahlrichtung des Lichtreflektorelements in einem Winkel im Bereich von 1° bis 44° ausgerichtet ist. Die Besonderheit bei zumindest einem Paar dieser Reflektorflächen ist somit, dass durch die eine Reflektorfläche ein Teil des einfallenden Lichtfeldes effektiv in einem steilen Winkel zur Lichteinstrahlrichtung und durch die andere Reflektorfläche ein anderer Teil des einfallenden Lichtfeldes effektiv in einem flachen Winkel zur Lichteinstrahlrichtung so abgelenkt wird, dass insgesamt die vektoriellen Beiträge der Lichtfeldanteile alle Raumachsen abdecken können, was z.B. die Realisierung einer dreidimensionalen Atomfalle ermöglicht.

Durch die Reflektorflächen wird das in Lichteinstrahlrichtung eingestrahlte Licht somit nicht orthogonal zur Lichteinstrahlrichtung abgelenkt, sondern in einem schrägen Winkel dazu. Dies kann z.B. als eine Pyramiden-Optik realisiert sein. Durch die optimierte Ablenkrichtung der Reflektorflächen werden einfallende Lichtstrahlen im Winkel in Bezug auf die Flächennormale so abgelenkt, dass insgesamt die vektoriellen Beiträge der Lichtfelder weiterhin alle Raumachsen abdecken, d.h. Komponenten in allen Raumachsen haben, ohne dass das Licht, das das Lichtreflektorelement im Zentrum passiert, für den Betrieb als magnetooptische Falle in sich reflektiert werden muss, d.h. es muss nicht durch einen in Lichteinstrahlrichtung hinter dem Lichtreflektorelement angeordneten Spiegel zurückreflektiert werden. Dies hat den Vorteil, dass kein steuerbares Polarisationselement wie z.B. ein LCVR zum Umschalten zwischen der MOT-Phase und der Interferometrie-Phase bzw. der Detektionsphase während des Interferometriezyklus im Retroreflexpfad benötigt wird, da ein solcher Retroreflexpfad an sich nicht mehr für die magnetooptische Falle benötigt wird. Durch den Entfall des steuerbaren Polarisationselements können Phasenfehler im Atominterferometer durch Wellenfrontstörungen ebenfalls reduziert werden. Es ist zudem möglich, dass Spulen für die magnetooptische Falle an oder in der Vakuumkammer angeordnet werden anstatt um die Vakuumkammer herum.

Ein weiterer Vorteil ist, dass das Zentrum des Lichtreflektorelements nicht beleuchtet werden muss, wodurch verschachtelte Interferometer oder andere Messmethoden mit lasergekühlten Atomen weniger gestört werden.

Die Anwendungsmöglichkeiten des Lichtreflektorelements sind nicht auf Atominterferometer beschränkt. Vorteilhaft ist das Freibleiben eines Zugangs in Lichtstrahlrichtung hinter dem Lichtreflektorelement, an dem kein Spiegel für eine Retroreflexion in Lichteinstrahlrichtung benötigt wird. Dieser Zugang kann z.B. für eine optische Dipolfalle, Detektionsoptiken, einen Atomofen und ähnliches in einem anderen atomoptischen Aufbau verwendet werden.

Gemäß einer vorteilhaften Ausgestaltung der Erfindung ist vorgesehen, dass das Lichtreflektorelement ein oder mehrere Paare der einander zugeordneten Reflektorflächen hat, bei denen eine Reflektorfläche des Paares bezüglich der vordefinierten Lichteinstrahlrichtung des Lichtreflektorelements in einem Winkel von zumindest ungefähr 67,5°, d.h. unter Berücksichtigung von Fehlertoleranzen, ausgerichtet ist und die andere Reflektorfläche desselben Paares bezüglich der vordefinierten Lichteinstrahlrichtung des Lichtreflektorelements in einem Winkel von zumindest ungefähr 22,5° ausgerichtet ist. Auf diese Weise kann die Wirksamkeit eines Lichtreflektorelements als Atomfalle besonders effizient gestaltet werden. Durch mehrere Paare solcher einander zugeordneter Reflektorflächen, die jeweils um einen gewissen Umfangswinkel in Umfangsrichtung versetzt angeordnet sind, kann ohne Retroreflexpfad ein dreidimensionales Halten und Kühlen der gefangenen Atome durch das Laserlicht realisiert werden. Die durch die Reflektorflächen abgelenkten Lichtstrahlen treffen dann in einem 45° Winkel die Zentrumsachse.

Gemäß einer vorteilhaften Ausgestaltung der Erfindung ist vorgesehen, dass bei einem oder mehreren Paaren der einander zugeordneten Reflektorflächen eine Reflektorfläche des Paares bezüglich der vordefinierten Lichteinstrahlrichtung des Lichtreflektorelements in einem Winkel W1 ausgerichtet ist und die andere Reflektorfläche desselben Paares bezüglich der vordefinierten Lichteinstrahlrichtung des Lichtreflektorelements in einem Winkel W2 ausgerichtet ist, wobei die Summe aus W1 und W2 gleich oder nahezu gleich 90°. Hierdurch wird es möglich, dass mit ein und derselben Lichteinstrahlrichtung durch ein Paar der einander zugeordneten Reflektorflächen Lichtstrahlen schräg abgelenkt werden und miteinander fluchtend aufeinander zu verlaufen, sodass sie sich an der Zentrumsachse treffen.

Gemäß einer vorteilhaften Ausgestaltung der Erfindung ist vorgesehen, dass die Anzahl der Paare der einander zugeordneten Reflektorflächen des Lichtreflektorelements gleich 3 oder ein Vielfaches von 3 ist. Dies ermöglicht einen einfachen Aufbau des Lichtreflektorelements und dementsprechend eine einfache und günstige Herstellung. Dabei kann jeweils ein Paar der einander zugeordneten Reflektorflächen um einen bestimmten Umfangswinkel in Umfangsrichtung versetzt zu einem benachbarten Paar angeordnet sein.

Gemäß einer vorteilhaften Ausgestaltung der Erfindung ist vorgesehen, dass das Lichtreflektorelement wenigstens ein weiteres Paar der einander zugeordneten Reflektorflächen hat, bei dem beide Reflektorflächen des Paares bezüglich einer Geraden, die orthogonal zu der vordefinierten Lichteinstrahlrichtung des Lichtreflektorelements verläuft und die Zentrumsachse schneidet, in einem Winkel von 45° ausgerichtet sind. Dementsprechend hat das Lichtreflektorelement außer den zuvor erwähnten Paaren von Reflektorflächen, von denen eine im Winkel im Bereich von 46° bis 89° eingerichtet ist und die andere Reflektorfläche in einem Winkel im Bereich von 1° bis 44° ausgerichtet ist, das erwähnte wenigstens eine weitere Paar der einander zugeordneten Reflektorflächen, die nicht diese schrägwinklige Anordnung haben. Mit den weiteren Reflektorflächen können z.B. aufeinander zuweisende Lichtstrahlen aus den in Lichteinstrahlrichtung einfallenden Lichtstrahlen erzeugt werden, die in orthogonaler Richtung auf die Zentrumsachse gerichtet sind.

In einer ersten Variante können die Reflektorflächen des weiteren Paares in einem Winkel von oder nahezu von 45° zur Lichteinstrahlrichtung ausgerichtet sein. Dies erlaubt eine direkte Ablenkung des in Lichteinstrahlrichtung einfallenden Lichts orthogonal zur Zentrumsachse.

Gemäß einer vorteilhaften Ausgestaltung der Erfindung ist vorgesehen, dass das Lichtreflektorelement für jede Reflektorfläche des weiteren Paares der einander zugeordneten Reflektorflächen wenigstens eine dieser Reflektorfläche zugeordnete Zusatz-Reflektorfläche hat, die in der vordefinierten Lichteinstrahlrichtung des Lichtreflektorelements einstrahlendes Licht auf die zugeordnete Reflektorfläche ablenkt. Durch eine Reflektorfläche des weiteren Paares und eine dieser Reflektorfläche zugeordnete Zusatz-Reflektorfläche wird eine Anordnung von gegeneinander verdrehten Reflektorflächen geschaffen, durch die eine besonders effektive Erzeugung von Lichtstrahlung in orthogonaler Richtung zur Zentrumsachse erzeugt werden kann. Beispielsweise kann die Reflektorfläche des weiteren Paares parallel zur Lichteinstrahlrichtung ausgerichtet sein. Die Zusatz-Reflektorfläche kann dann im Winkel von 45° bezüglich der vordefinierten Lichteinstrahlrichtung des Lichtreflektorelements ausgerichtet sein. Das in Lichteinstrahlrichtung einstrahlende Licht kann durch die Zusatz-Reflektorfläche auf die zugeordnete Reflektorfläche des weiteren Paares abgelenkt werden und von dieser Reflektorfläche dann orthogonal in Richtung Zentrumsachse abgelenkt werden.

Die Reflektorflächen können in Umfangsrichtung um die Zentrumsachse herum mit gleichmäßigem Winkelabstand zueinander angeordnet sein. Die Reflektorflächen eines Paares von Reflektorflächen können sich bezüglich des Zentrums des Lichtreflektorelements diametral gegenüberliegen.

Gemäß einer vorteilhaften Ausgestaltung der Erfindung ist vorgesehen, dass zwischen in Umfangsrichtung benachbarten Reflektorflächen jeweils ein lichttransmittierender Abschnitt angeordnet ist, durch den das in Lichteinstrahlrichtung einfallende Licht durch das Lichtreflektorelement hindurchstrahlen kann. Beim erfindungsgemäßen Lichtreflektorelement wird somit nicht nur, wie im Stand der Technik, ein zentraler Innenbereich des Lichtreflektorelements Licht-transmittierend ausgebildet, sondern es werden alternativ oder zusätzlich Ausschnitte zwischen den Reflektorflächen in Umfangsrichtung geschaffen, die lichttransmittierend sind. Durch eine solche Gestaltung des Lichtreflektorelements können Vorteile erreicht werden:
- Geringere abzudeckende Fläche für den Laserstrahl bei hintereinander angeordneten Lichtreflektorelementen
- Symmetrische Intensitätsverteilung in den Wechselwirkungszonen
- Verbesserte Symmetrien in der Zahl der Atome in den beiden Wechselwirkungszonen
- Entsprechende Verbesserung des Gradiometersignals durch systematische Effekte
- Verkleinerung der Apparatur mit Vorteilen für die Kompaktheit
- Geringere benötigte Laserleistung und damit verringerte Restriktionen für den kompakten Aufbau und die Leistungsaufnahme

Die Erfindung ermöglicht eine verbesserte Konstruktion der Lichtreflektorelemente, bei der die Aufteilung des verfügbaren Laserlichts nicht durch eine radiale bzw. transmittierende, sondern durch eine winkelabhängige Segmentierung der Reflektorflächen erreicht wird. Dies ermöglicht eine Symmetrie der optischen Konfiguration. Gleichzeitig reduziert sich die Komplexität der Lichtreflektorelemente, die nicht zwangsweise aus lichtdurchlässigem Material gefertigt werden müssen und für alle zwei, drei oder mehr Wechselwirkungszonen identisch ausgelegt werden können. Dadurch vereinfacht sich die Fertigung. Die Symmetrie durch Verwendung identischer optischer Elemente reduziert weiterhin differentielle Fehler, die andernfalls die Signalqualität beeinflussen könnten.

Die Reflektorflächen sind dazu eingerichtet, Licht zu reflektieren, insbesondere mit einem Reflexionsgrad von im Wesentlichen 100%. Die Reflektorflächen können z.B. wie Spiegel ausgebildet sein. Die Reflektorflächen können als einheitliche, flächig durchgehende Reflektorflächen oder als eine Vielzahl von Einzelreflektorflächen, die gestaffelt nebeneinander an dem Reflektorelement angeordnet sind, ausgebildet sein. Eine Reflektorfläche kann von einer benachbarten Reflektorfläche dadurch abgegrenzt sein, dass sie in einem anderen Winkel zur benachbarten Reflektorfläche und/oder mit Versatz zur benachbarten Reflektorfläche angeordnet ist. Eine Reflektorfläche kann z.B. als ebene spiegelnde Fläche ausgebildet sein.

Gemäß einer vorteilhaften Ausgestaltung der Erfindung ist vorgesehen, dass einer, mehrere oder alle der lichttransmittierenden Abschnitte als Freiraum ausgebildet ist, in dem kein Material angeordnet ist. Dies hat den Vorteil, dass das Lichtreflektorelement besonders einfach gestaltet und hergestellt werden kann. Alternativ kann in einem, mehreren oder allen lichttransmittierenden Abschnitten auch ein Füllmaterial angeordnet sein, das lichtdurchlässig ist, z.B. ein Glas- oder Kunststoffmaterial.

Gemäß einer vorteilhaften Ausgestaltung der Erfindung ist vorgesehen, dass die Reflektorflächen in einem Abstand von dem Zentrum angeordnet sind, so dass um das Zentrum herum ein zentraler lichttransmittierender Abschnitt gebildet ist, durch den das in Lichteinstrahlrichtung einfallende Licht durch das Lichtreflektorelement hindurchstrahlen kann. Durch den zentralen lichttransmittierenden Abschnitt kann beispielsweise das Licht der Lichtquelle zu einem in Lichteinstrahlrichtung hinter dem Lichtreflektorelement oder einem dahinter angeordneten weiteren Lichtreflektorelement angeordneten Spiegel geleitet werden, durch den das Licht für die Durchführung der Interferometrie zurückreflektiert wird.

Das Lichtreflektorelement kann mehrteilig aus verschiedenen Einzelteilen zusammengesetzt sein. Beispielsweise können die einzelnen Reflektorflächen als verspiegelte Bauteile auf einem Basisbauteil aufgebracht sein, das als Träger für die Reflektorflächen dient.

Gemäß einer vorteilhaften Ausgestaltung der Erfindung ist vorgesehen, dass das Lichtreflektorelement als ein monolithisches Bauteil ausgebildet ist. Dies erlaubt eine sehr einfache und kostengünstige Herstellung eines Lichtreflektorelements, das zudem mechanisch sehr stabil ist. Dies vereinfacht außerdem die Integration des Lichtreflektorelements in ein Atominterferometer, die Justage wird vereinfacht.

Die eingangs genannte Aufgabe wird außerdem gelöst durch eine Reflektoranordnung, die wenigstens ein erstes Lichtreflektorelement und wenigstens ein zweites Lichtreflektorelement aufweist, wobei das zweite Lichtreflektorelement in Lichteinstrahlrichtung hinter dem ersten Lichtreflektorelement angeordnet ist. Dabei ist das erste Lichtreflektorelement als Lichtreflektorelement der zuvor beschrieben Art ausgebildet, d.h. als
erfindungsgemäßes Lichtreflektorelement. Das zweite Lichtreflektorelement kann auch als erfindungsgemäßes Lichtreflektorelement ausgebildet sein, es kann aber auch anders ausgebildet sein. Dabei kann durch die lichttransmittierenden Abschnitte des ersten Lichtreflektorelements hindurchstrahlendes Licht auf die Reflektorflächen des zweiten Lichtreflektorelements treffen. Durch eine solche Reflektoranordnung können vorteilhaft zwei Wechselwirkungszonen eines Quanten-Gradiometers gebildet werden. Dabei ist die erforderliche abzudeckende Fläche für den Laserstrahl relativ gering. Zudem kann eine symmetrische Intensitätsverteilung in den Wechselwirkungszonen auf einfache Weise realisiert werden.

Vorteilhafterweise können das erste und das zweite Lichtreflektorelement hinsichtlich der Dimensionen ihrer optisch wirksamen Reflektorflächen gleich groß gestaltet werden. Vorteilhaft ist ferner, wenn das zweite Lichtreflektorelement in Lichteinstrahlrichtung entlang derselben Zentrumsachse hinter dem ersten Lichtreflektorelement angeordnet ist, also konzentrisch zu dem ersten Lichtreflektorelement angeordnet ist.

Die eingangs genannte Aufgabe wird außerdem gelöst durch ein Atomgerät, insbesondere Atominterferometer, mit wenigstens einer Laserlichtquelle und einer Atomfalle, die wenigstens eine erste Wechselwirkungszone zum Kühlen gefangener Atome durch aus entgegengesetzten Richtungen auf die gefangenen Atome einstrahlendes Laserlicht der Laserlichtquelle hat, wobei das Atomgerät ein erstes Lichtreflektorelement der zuvor erläuterten Art hat, wobei die Lichtabstrahlrichtung der Laserlichtquelle in der vordefinierten Lichteinstrahlrichtung des ersten Lichtreflektorelements ausgerichtet ist, wobei die erste Wechselwirkungszone wenigstens zum Teil durch das erste Lichtreflektorelement gebildet ist. Auch hierdurch können die zuvor erläuterten Vorteile realisiert werden. Das Atomgerät kann ein beliebiges Atomgerät mit in der Atomfalle lasergekühlten Atomen sein. Die Atomfalle kann als magnetooptische Falle (MOT) ausgebildet sein.

Die Atomfalle kann als dreidimensional wirkende Atomfalle (z.B. 3D-MOT) ausgebildet sein, wobei die vektoriellen Anteile des aus entgegengesetzten Richtungen auf die gefangenen Atome einstrahlenden Laserlichts in der ersten Wechselwirkungszone alle Raumachsen umfassen. Auch hierdurch kann der Aufbau des Atomgeräts vereinfacht werden.

Die magnetooptische Falle fungiert dabei als Atomfalle, die dazu eingerichtet ist, eine Atomwolke zu fangen. Die magnetooptische Falle weist eine Magnetfeldvorrichtung auf, um damit einen magnetisch wirksamen Teil der Atomfalle zu realisieren. Ferner weist das Atominterferometer wenigstens eine steuerbare Laserlichtquelle auf, z.B. einen Laser, durch den Licht in der vordefinierten Lichteinstrahlrichtung auf das oder die Lichtreflektorelemente bzw. die Reflektoranordnung abgestrahlt wird. Hierdurch wird die Laserkühlung der gefangenen Atome in der oder den Wechselwirkungszonen realisiert.

Gemäß einer vorteilhaften Ausgestaltung der Erfindung ist vorgesehen, dass die Atomfalle auf der von der Laserlichtquelle abgewandten Seite des ersten Lichtreflektorelements ohne einen entlang der Zentrumsachse verlaufenden Lichtstrahlpfad ausgebildet ist. Dementsprechend kann der Retroreflex-Lichtpfad zumindest für die Kühlung der Atome vermieden werden, wodurch die Phasenfehler im Atominterferometer minimiert werden können und der gesamte Aufbau vereinfacht werden kann, insbesondere kein LCVR oder ähnliches Bauelement für die Steuerung des zurückgestrahlten Lichts erforderlich ist.

Gemäß einer vorteilhaften Ausgestaltung der Erfindung ist vorgesehen, dass das Atomgerät wenigstens zwei Wechselwirkungszonen zum Kühlen gefangener Atome durch aus entgegengesetzten Richtungen auf die gefangenen Atome einstrahlendes Laserlicht hat, wobei das Atomgerät ein zweites Lichtreflektorelement hat, das in Lichteinstrahlrichtung hinter dem ersten Lichtreflektorelement angeordnet ist, wobei eine zweite Wechselwirkungszone wenigstens zum Teil durch das zweite Lichtreflektorelement gebildet ist. Das Atomgerät kann z.B. eine Reflektoranordnung der zuvor beschriebenen Art haben. Das zweite Lichtreflektorelement kann als erfindungsgemäßes Lichtreflektorelement, wie zuvor beschrieben, ausgebildet sein oder als ein anders gestaltetes Lichtreflektorelement, z.B. ein Lichtreflektorelement gemäß dem Stand der Technik. Das Atomgerät kann z.B. als Quanten-Gradiometer ausgebildet sein.

Die Erfindung eignet sich z.B. für Anwendungen im Bereich der Navigation, für Rotations- und Beschleunigungsmessungen, z.B. als Teil einer inertialen Quantenmesseinheit zur Unterstützung oder an Stelle konventioneller inertialen Messeinheiten, insbesondere in Bereichen ohne verlässliches globales Navigationssystem (GNSS).

Im Sinne der vorliegenden Erfindung ist unter dem unbestimmten Begriff "ein" kein Zahlwort zu verstehen. Wenn also z.B. von einem Bauteil die Rede ist, so ist dies im Sinne von "mindestens einem Bauteil" zu interpretieren. Soweit Winkelangaben in Grad gemacht werden, beziehen sich diese auf ein Kreismaß von 360 Grad (360°).

Die Erfindung wird nachfolgend anhand von Ausführungsbeispielen unter Verwendung von Zeichnungen näher erläutert.

Es zeigen
- Figur 1: ein Atomgerät in stark schematisierter seitlicher Schnittansicht,
- Figur 2: ein Lichtreflektorelement in Draufsicht,
- Figur 3: das Lichtreflektorelement gemäß Figur 2 in seitlicher Schnittansicht,
- Figur 4: ein Lichtreflektorelement einer weiteren Ausführungsform in Draufsicht,
- Figur 5: das Lichtreflektorelement gemäß Figur 4 in seitlicher Schnittansicht,
- Figur 6: ein Lichtreflektorelement einer weiteren Ausführungsform in Draufsicht,
- Figur 7: das Lichtreflektorelement gemäß Figur 6 in seitlicher Schnittansicht in einer weiteren Schnittebene,
- Figur 8: das Lichtreflektorelement gemäß Figur 6 in perspektivischer Ansicht,
- Figur 9: Einbringung des Laserlichts in der Kühlkonfiguration,
- Figur 10: Einbringung des Laserlichts in der Interferometriekonfiguration.

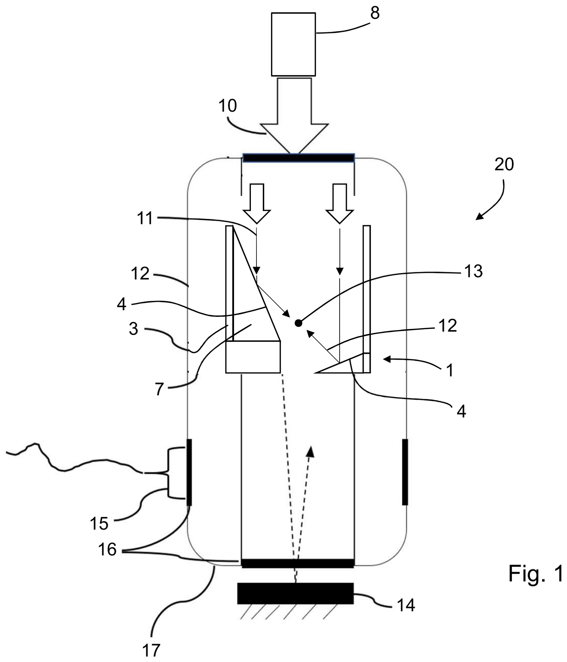

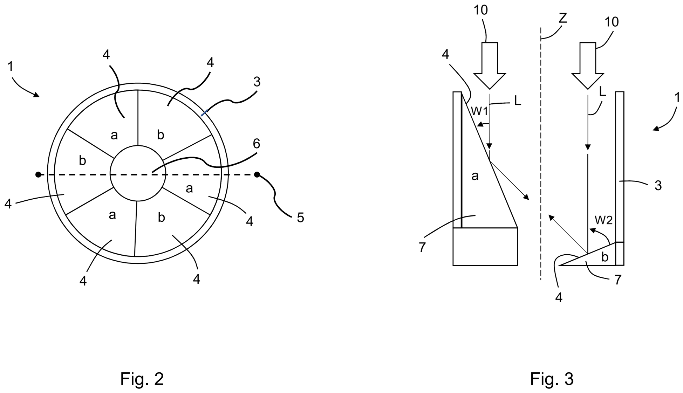

Die Figur 1 zeigt ein Atomgerät 20, z.B. ein Atominterferometer. Das Atomgerät 20 hat eine kohärente Lichtquelle 8, z.B. einen Laser, durch den das Licht 10 in der Lichteinstrahlrichtung L abgestrahlt wird. Das Atomgerät 20 hat ferner eine Vakuumkammer 17, in der ein Lichtreflektorelement 1 der zuvor beschriebenen Art angeordnet ist, z.B. wie in den Figuren 2, 3 dargestellt. Man erkennt, dass der Wellenvektor 11 des einfallenden Lichts 10, der in Lichteinstrahlrichtung L in Bezug auf das Lichtreflektorelement 1 ausgerichtet ist, auf eine Wechselwirkungszone 13 gerichtet ist, in der Atome in einer Atomfalle gefangen und durch das Laserlicht gekühlt werden können. Zusätzlich ist durch Wellenvektoren 12 die Richtung des an den Reflektorflächen 4 reflektierten Lichts der Lichtquelle 8 dargestellt.

Wie erkennbar ist, hat ein Paar einander zugeordneter Reflektorflächen 4 unterschiedliche Winkel bezüglich der Lichteinstrahlrichtung L. Die links dargestellte Reflektorfläche 4 hat einen Winkel von weniger als 45°, z.B. 22,5°, die rechte Reflektorfläche 4 hat einen Winkel größer als 45°, z.B. 67,5°. Durch diese Art der Optik wird ein Teil des einfallenden Lichtfelds 10 mit einer vektoriellen Komponente gleichgerichtet zum Wellenvektor 11 und ein anderer Teil des einfallenden Lichtfelds 10 mit einer vektoriellen Komponente entgegengesetzt zum Wellenvektor 11 abgelenkt, wobei sich die gegenläufigen Wellenvektoren 12 wiederum in der Wechselwirkungszone 13 treffen. Die Wellenvektoren 12 sind somit antiparallel zueinander ausgerichtet. Durch eine solche Optik können insgesamt durch die vektoriellen Beiträge der Lichtfeldanteile alle Raumachsen abgedeckt werden.

Auf diese Weise treten in der Wechselwirkungszone 13 vektorielle Lichtkomponenten in allen sechs Raumrichtungen auf, sodass mit dem einen Lichtreflektorelement 1 bereits eine dreidimensional wirkende Atomfalle realisiert werden kann, ohne dass dafür eine Reflexion durch einen Spiegel hinter dem Lichtreflektorelement 1 notwendig ist. Auf diese Weise ist eine dreidimensionale Laserkühlung der Atome mit geringem Aufwand möglich.

Dabei erlaubt die Ausführung des Lichtreflektorelements 1 einen gleichförmigen Lichtdruck auf die Atome in der Wechselwirkungszone 13 in Richtung der Lichteinstrahlrichtung L und entgegengesetzt zur Lichteinstrahlrichtung L.

Für die nachfolgende Durchführung eines Interferometriezyklus können die in der Atomfalle, d.h. der Wechselwirkungszone 13 gefangenen Atome dann ausgekoppelt werden und fallen beispielsweise in der Vakuumkammer 17 nach unten. Die Vakuumkammer 17 kann optisch transparente Schaugläser bzw. View Ports enthalten, durch die dann mittels z.B. einer Kamera oder einer Fotodiode die Auswertung der Interferometrieausgänge erfolgen kann. Zudem kann auf der der Lichtquelle 8 abgewandten Seite der Vakuumkammer 17 ein Spiegel 14 für die Interferometrie vorhanden sein. Ein Detektionssystem 15 für die Auswertung der Interferometrieausgänge kann z.B. vor einem View Port 16 platziert werden.

Der Spiegel 14 kann auch innerhalb der Vakuumkammer 17 montiert sein. Denkbar ist auch eine Montage des Spiegels 14 auf einem ferngesteuerten Spiegelhalter, wodurch der reflektierte Anteil des Lichtfelds durch automatische Steuerung so verkippt werden kann, dass die Auswirkung auf die magnetooptische Falle reduziert werden kann. Eine weitere Alternative zur Minimierung seiner Auswirkung auf die magnetooptische Falle ist die Anordnung z.B. eines Shutters zwischen dem unteren Schauglas 16 und dem Spiegel 14.

Das beschriebene Ausführungsbeispiel der Optik ermöglicht ebenfalls einen Aufbau mit zwei hintereinander angeordneten Lichtreflektorelementen 1, die eine Reflektoranordnung bilden. Mit einer solchen Reflektoranordnung 9 kann z.B. ein Quanten-Gradiometer realisiert werden, sodass eine Messung des Gravitationsgradienten mit einer Lichtquelle 8 realisierbar ist.

Die Figur 2 zeigt das Lichtreflektorelement 1 aus Figur 1 in einer Draufsicht, die Figur 3 zeigt das Lichtreflektorelement 1 in einer Schnittansicht in der in Figur 2 dargestellten mittigen Schnittebene 5. Das Lichtreflektorelement 1 gemäß den Figuren 2, 3 hat einen Basiskörper 3, an dem mehrere, in diesem Fall 6, über eine Umfangswinkelkoordinate gleichmäßig verteilt angeordnete Reflektorflächen 4 angeordnet sind, die bezüglich einer vordefinierten Lichteinstrahlrichtung L des Lichtreflektorelements 1 schräg angeordnet sind. Die Reflektorflächen 4 sind jeweils als spiegelnde Oberflächen eines Reflektorkörpers 7 ausgebildet. Die Reflektorflächen 4 können jeweils paarweise gegenüberliegend angeordnet sein, d.h. zwei gegenüberliegende Reflektorflächen 4 bilden ein Paar a, b von Reflektorflächen 4, wobei auch andere Anordnungen denkbar sind. Die Reflektorflächen 4 sind jeweils symmetrisch bezüglich eines Zentrums des Lichtreflektorelements 1 einander gegenüberliegend angeordnet, insbesondere punktsymmetrisch oder spiegelsymmetrisch. Das Zentrum des Lichtreflektorelements 1 wird in Figur 2 durch eine Zentrumsachse Z verdeutlicht. Die Zentrumsachse Z verläuft durch das Zentrum des Lichtreflektorelements 1 in Lichteinstrahlrichtung L.

Wie man erkennt, können beispielsweise drei Paare a, b von Reflektorflächen 4 vorhanden sein. Die Reflektorflächen 4 erstrecken sich nicht bis zum Zentrum des Lichtreflektorelements 1, sondern enden davor, sodass ein zentraler lichttransmittierender Bereich 6 um die Zentrumsachse Z herum vorhanden ist. Wie die Figur 3 zeigt, ist die Reflektorfläche a des Paares a, b von Reflektorflächen 4 in einem spitzen Winkel W1 zur Lichteinstrahlrichtung L ausgerichtet, die zugeordnete Reflektorfläche b desselben Paares a, b ist in einem stumpfen Winkel W2 zur Lichteinstrahlrichtung L ausgerichtet. Die Summe aus W1 und W2 ergibt 90°. Durch die in Umfangsrichtung versetzt angeordneten drei Paare a, b von Reflektorflächen 4 kann die Wechselwirkungszone 13 aus allen sechs Raumrichtungen gleichmäßig mit Licht bestrahlt werden.

Das Lichtreflektorelement 1 kann beispielsweise aus einem Rohbauteil durch spanende Bearbeitung hergestellt werden, z.B. durch Fräsen. Es ist auch möglich das Lichtreflektorelement aus zwei Teilen herzustellen, die dann ineinander gesetzt werden. Vorteilhafte Ausleuchtungsmöglichkeiten des Lichtreflektorelements 1 sind ein gaußförmiger Strahl zentriert auf die Zentrumsachse Z, ein "flat-top" bzw. "top-hat" Strahlprofil oder ein ringförmiges Strahlprofil.

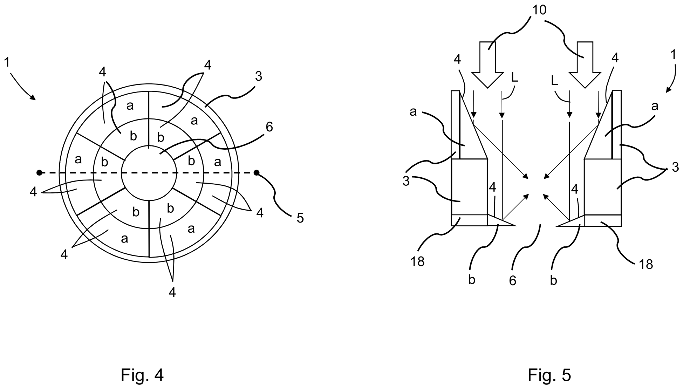

Anhand der Figuren 4 und 5 wird eine weitere Ausführungsform eines Lichtreflektorelements 1 erläutert. Die Figur 5 zeigt wiederum eine Schnittdarstellung entlang der in Figur 4 eingezeichneten mittigen Schnittebene 5. Man erkennt, dass das Lichtreflektorelement 1 insgesamt 12 Reflektorflächen 4 hat, die in Form zweier konzentrischer Ringanordnungen um das Zentrum bzw. den lichttransmittierenden zentralen Abschnitt 6 herum angeordnet sind. In Umfangsrichtung sind die beiden ringförmigen Anordnungen der Reflektorflächen 4 wiederum, wie bei der Ausführungsform der Figuren 2 und 3, in sechs Sektoren aufgeteilt. Dabei wird ein Paar a, b einander zugeordneter Reflektorflächen 4 jeweils durch eine im Winkel W1 zur Lichteinstrahlrichtung L ausgerichtete, am äußeren Ring angeordnete Reflektorfläche a und eine im Winkel W2 zur Lichteinstrahlrichtung L ausgerichtete, am inneren Ring gegenüberliegend angeordnete Reflektorfläche b gebildet. Durch die Reflektorflächen a im äußeren Ring werden die Lichtstrahlen somit im 45°-Winkel nach unten reflektiert und durch die Reflektorflächen b am inneren Ring werden die Lichtstrahlen um 135° nach oben zurückreflektiert. Ausleuchtungsmöglichkeiten: flat-top/top-hat Strahlprofil, ringförmiges Strahlprofil. Vorteilhafte Ausleuchtungsmöglichkeiten des Lichtreflektorelements 1 sind ein zentriert auf die Zentrumsachse Z ausgerichtetes "flat-top" bzw. "top-hat" Strahlprofil oder ein ringförmiges Strahlprofil.

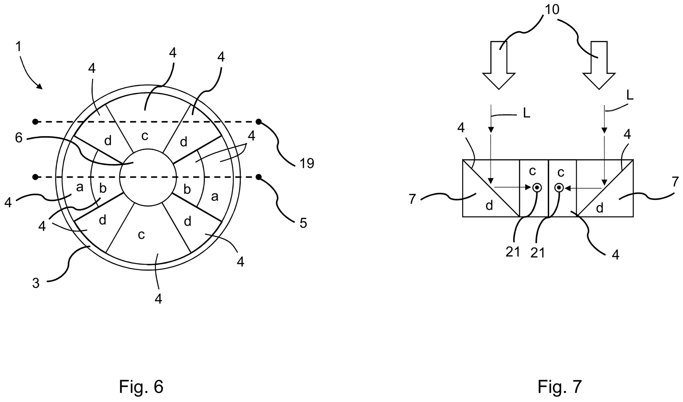

Anhand der Figuren 6 bis 8 wird eine weitere Ausführungsform eines Lichtreflektorelements 1 beschrieben. Das Lichtreflektorelement 1 ist in Figur 6 in einer Draufsicht dargestellt. In der Figur 6 auch wiederum die zentrale Schnittebene 5 eingezeichnet. In der zentralen Schnittebene 5 hat das Lichtreflektorelement 1 gemäß Figur 6 einen vergleichbaren Aufbau wie das Lichtreflektorelement 1 gemäß Figur 4, d.h. in der Schnittebene 5 ergibt sich beim Lichtreflektorelement 1 gemäß Figur 6 die gleiche Darstellung wie in Figur 5. Es sind dementsprechend auch einander zugeordnete Reflektorflächen a, b eines Paares a, b vorhanden, die in unterschiedlichen radialen Abständen vom Zentrum angeordnet sind. Allerdings sind nur zwei Paare a, b der Reflektorflächen 4 vorhanden.

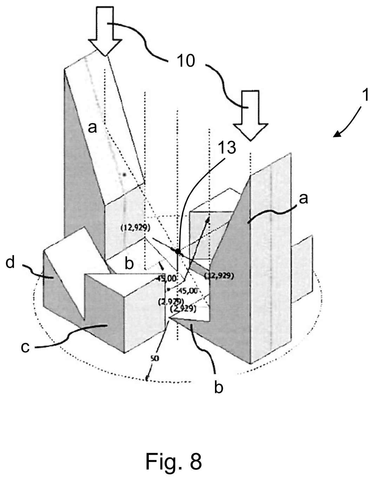

Die Figur 7 zeigt das Lichtreflektorelement 1 in einer Schnittansicht in der in Figur 6 eingezeichneten dezentralen Schnittebene 19. Wie man erkennt, hat das Lichtreflektorelement 1 ein weiteres Paar c der einander zugeordneten Reflektorflächen 4. Diese Reflektorflächen 4 des weiteren Paares c sind bezüglich einer Geraden, die orthogonal zur vordefinierten Lichteinstrahlrichtung L des Lichtreflektorelements 1 verläuft und die Zentrumsachse Z schneidet, in einem Winkel von 45° ausgerichtet. Zudem ist jeder der Reflektorflächen c des weiteren Paares wenigstens eine Zusatz-Reflektorfläche d zugeordnet, die in Lichteinstrahlrichtung L eingestrahltes Licht auf die Reflektorfläche c ablenkt. Durch diese Anordnung von Reflektorflächen c, d kann auch bei ringförmig eingestrahltem Lichtstrahlprofil eine weitere Raumrichtung des Lichts für eine dreidimensionale magnetooptische Falle erzeugt werden. In dieser Ausführungsform können die Spulen der magnetooptischen Falle nicht auf der Achse des Gesamtelements, sondern über oder unter diesem Gesamtelement montiert werden. Vorteilhafte Ausleuchtungsmöglichkeiten des Lichtreflektorelements 1 sind ein zentriert auf die Zentrumsachse Z ausgerichtetes "flat-top" bzw. "top-hat" Strahlprofil oder ein ringförmiges Strahlprofil. Die Figur 8 zeigt das Lichtreflektorelement 1 gemäß den Figuren 6 und 7 in einer perspektivischen Ansicht, durch die Ausleuchtungsmöglichkeiten und die Lichtablenkungen noch besser verdeutlicht werden.

Die Reflektorflächen a und b in Figur 2 und 3, die eine Reflexion in einem steilen bzw. flachen Winkel bewirken, können alternativ auch durch zwei zueinander verdrehte Elemente ersetzt werden, die einzeln jeweils um 90° ablenken, sofern das aufgrund von Polarisationseigenschaften zu bevorzugen ist.

Eine äquivalente Betrachtung gilt für das Lichtreflektorelement 1 in den Figur 4 und 8, wobei die Reflektorflächen a und b alternativ auch durch zwei zueinander verdrehte Elemente ersetzt werden können, die einzeln jeweils um 90° ablenken. Eine Anordnung von Reflektorflächen c, d kann durch eine einzige Reflektorfläche c ersetzt werden, die das Licht von der vordefinierten Lichteinstrahlrichtung L direkt um 90° ins Zentrum ablenkt.

Das Lichtreflektorelement 1 kann monolithisch gefertigt werden, z.B. durch Ausfräsen, Pressen oder 3D-Druck, je nach Material, oder alternativ auch aus einzelnen Teilkomponenten gefügt werden. Die Reflexion an den Reflektorflächen kann je nach Anforderung und Material des Gesamtelements z.B. durch Polieren oder Beschichtungen optimiert werden. Eine monolithische Fertigung bietet den Vorteil eines erheblich reduzierten Justageaufwandes bei der Bauteilfertigung, sowie ggf. passive Stabilität.

Alle Varianten des Lichtreflektorelements 1 eignen sich für eine 3D-magnetooptische Falle. Die Winkel W1, W2 können anders gewählt werden, wesentlich ist die Antiparallelität der Wellenvektoren der reflektierten Lichtfelder.

Bei allen Varianten des Lichtreflektorelements 1 kann der Basiskörper 3, z.B. in Form eines Rahmenteilements, mit Löchern bzw. Aussparungen versehen sein, um einen weiteren Zugang zur ermöglichen, z.B. für den Atomstrahl aus einer 2D-magnetooptischen Falle für ein schnelleres Beladen der 3D-magnetooptischen Falle oder einen optischen Zugang.

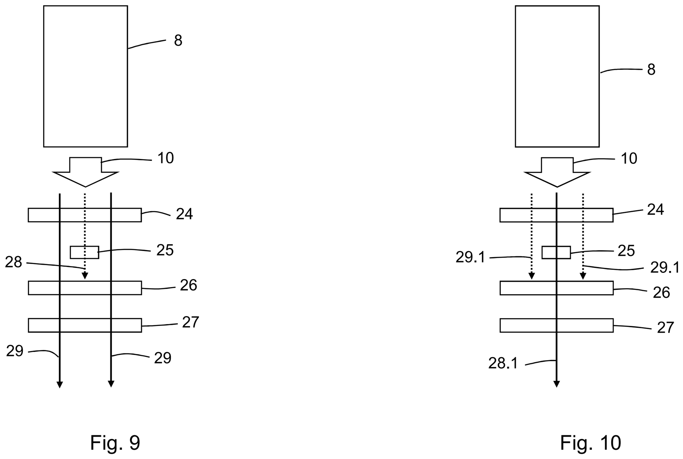

Anhand der Figuren 9 und 10 wird schematisch erläutert, wie das Licht 10 der Lichtquelle 8 in das Lichtreflektorelement 1 bzw. in die Vakuumkammer 17 eingebracht werden kann. Die in den Figuren 9 und 10 dargestellte Anordnung kann dementsprechend dem Lichtreflektorelement 1 bzw. der Vakuumkammer 17 vorgeschaltet sein. Die Figur 9 zeigt die Einbringung des Lichts 10 während der Laserkühlung der Atome in der Wechselwirkungszone 13, die Figur 10 zeigt die Einbringung des Lichts 10 nach der Auskopplung der Atome aus der Atomfalle und bei der Durchführung des Interferometrieprozesses.

Die in den Figuren 9 und 10 dargestellte Anordnung weist ein einstellbares Verzögerungsplättchen 24 auf, z.B. ein LCVR. In Lichteinstrahlrichtung L hinter dem einstellbaren Verzögerungsplättchen 24 ist ein zweites Verzögerungsplättchen 25 angeordnet. Hinter dem zweiten Verzögerungsplättchen 25 ist ein Polarisationsfilter 26 angeordnet, z.B. eine Folie oder ein Polarisationsstrahlteilerwürfel. Hinter dem Polarisationsfilter 26 kann optional noch ein drittes Verzögerungsplättchen 27 angeordnet sein.

In der Kühlkonfiguration gemäß Figur 9 wird der zentrale Lichtanteil 28 des Lichts 10 abgeblockt und gelangt somit nicht bis zum Lichtreflektorelement 1. Dagegen werden die äußeren Lichtanteile 29 durch die beschriebene Anordnung transmittiert und gelangen bis zum Lichtreflektorelement 1.

In der Interferometriekonfiguration gemäß Figur 10 wird der zentrale Lichtanteil 28.1 durch die beschriebene Anordnung transmittiert und kann somit durch das Lichtreflektorelement 1 hindurchstrahlen. Dagegen werden die äußeren Lichtanteile 29.1 in dieser Konfiguration abgeblockt und gelangen nicht bis zum Lichtreflektorelement 1.

Die Kombination der Elemente 24, 25 und 26 ermöglicht ein Schalten zwischen einer Beleuchtung der dezentralen Reflektorflächen 4 des Lichtreflektorelements 1 oder wahlweise des lichttransmittierenden zentralen Bereichs 6. Die gezielte Beleuchtung des Zentrums des Lichtreflektorelements 1 bzw. der Vakuumkammer 17 ermöglicht z.B. in Verbindung mit weiteren Elementen, z.B. einem Retroreflexspiegel 14, die Implementierung einer Strahlkonfiguration, die für ein Atominterferometer geeignet ist.

Das zweite Verzögerungsplättchen 25 kann als Variante so ausgelegt werden, dass gezielt ein ringförmiger Bereich um das Zentrum permanent geblockt wird. Die Reihenfolge der Verzögerungsplättchen 24, 25 ist austauschbar. Die Funktionalität der Elemente 24, 25, 26 kann auch anders realisiert werden. Wesentlich ist dabei die Funktionalität mit der Schaltbarkeit zwischen der Beleuchtung des äußeren Rings oder alternativ des Zentrums.

## Patentansprüche

1. Lichtreflektorelement (1, 2), das mehrere Reflektorflächen (4) hat, die in verschiedenen vordefinierten Winkeln bezüglich einer vordefinierten Lichteinstrahlrichtung (L) des Lichtreflektorelements (1, 2) ausgerichtet sind, wobei die Reflektorflächen (4) um ein Zentrum des Lichtreflektorelements (1, 2), z.B. ringförmig, angeordnet sind, wobei jeweilige Paare (a, b) von einander zugeordneten Reflektorflächen (4) bezüglich des Zentrums des Lichtreflektorelements (1, 2) einander diametral gegenüberliegend angeordnet sind, sodass in Lichteinstrahlrichtung (L) einstrahlendes Licht durch die Reflektorflächen (4) in Lichtstrahlen (L2', L3') abgelenkt wird, die in unterschiedlichen Raumrichtungen aufeinander zu verlaufen und sich in einer Zentrumsachse (Z) treffen, die in Lichteinstrahlrichtung (L) durch das Zentrum hindurch verläuft, **dadurch gekennzeichnet, dass** das Lichtreflektorelement (1, 2) ein oder mehrere Paare (a, b) der einander zugeordneten Reflektorflächen (4) hat, bei denen eine Reflektorfläche (4) des Paares (a, b) bezüglich der vordefinierten Lichteinstrahlrichtung (L) des Lichtreflektorelements (1, 2) in einem Winkel im Bereich von 46° bis 89° ausgerichtet ist und die andere Reflektorfläche (4) desselben Paares (a, b) bezüglich der vordefinierten Lichteinstrahlrichtung (L) des Lichtreflektorelements (1, 2) in einem Winkel im Bereich von 1° bis 44° ausgerichtet ist.

2. Lichtreflektorelement nach Anspruch 1, **dadurch gekennzeichnet, dass** das Lichtreflektorelement (1, 2) ein oder mehrere Paare (a, b) der einander zugeordneten Reflektorflächen (4) hat, bei denen eine Reflektorfläche (4) des Paares (a, b) bezüglich der vordefinierten Lichteinstrahlrichtung (L) des Lichtreflektorelements (1, 2) in einem Winkel ausgerichtet ist, der im Wesentlichen gleich 67,5° ist, und die andere Reflektorfläche (4) desselben Paares (a, b) bezüglich der vordefinierten Lichteinstrahlrichtung (L) des Lichtreflektorelements (1, 2) in einem Winkel ausgerichtet ist, der im Wesentlichen gleich 22,5° ist.

3. Lichtreflektorelement nach einem der vorhergehenden Ansprüche, **dadurch gekennzeichnet, dass** bei einem oder mehreren Paaren (a, b) der einander zugeordneten Reflektorflächen (4) eine Reflektorfläche (4) des Paares (a, b) bezüglich der vordefinierten Lichteinstrahlrichtung (L) des Lichtreflektorelements (1, 2) in einem Winkel W1 ausgerichtet ist und die andere Reflektorfläche (4) desselben Paares (a, b) bezüglich der vordefinierten Lichteinstrahlrichtung (L) des Lichtreflektorelements (1, 2) in einem Winkel W2 ausgerichtet ist, wobei die Summe aus W1 und W2 im Wesentlichen gleich 90° ist.

4. Lichtreflektorelement nach einem der vorhergehenden Ansprüche, **dadurch gekennzeichnet, dass** die Anzahl der Paare (a, b) der einander zugeordneten Reflektorflächen (4) des Lichtreflektorelements gleich 3 oder ein Vielfaches von 3 ist.

5. Lichtreflektorelement nach einem der vorhergehenden Ansprüche, **dadurch gekennzeichnet, dass** das Lichtreflektorelement (1, 2) wenigstens ein weiteres Paar (c) der einander zugeordneten Reflektorflächen (4) hat, bei dem beide Reflektorflächen (4) des Paares (c) bezüglich einer Geraden, die orthogonal zu der vordefinierten Lichteinstrahlrichtung (L) des Lichtreflektorelements (1, 2) verläuft und die Zentrumsachse (Z) schneidet, in einem Winkel von 45° ausgerichtet sind.

6. Lichtreflektorelement nach Anspruch 5, **dadurch gekennzeichnet, dass** das Lichtreflektorelement (1, 2) für jede Reflektorfläche (4) des weiteren Paares (c) der einander zugeordneten Reflektorflächen (4) wenigstens eine dieser Reflektorfläche (4) zugeordnete Zusatz-Reflektorfläche (d) hat, die in der vordefinierten Lichteinstrahlrichtung (L) des Lichtreflektorelements (1, 2) einstrahlendes Licht auf die zugeordnete Reflektorfläche (4) des weiteren Paares (c) ablenkt.

7. Lichtreflektorelement nach einem der vorhergehenden Ansprüche, **dadurch gekennzeichnet, dass** zwischen in Umfangsrichtung benachbarten Reflektorflächen (4) jeweils ein lichttransmittierender Abschnitt (5) angeordnet ist, durch den das in Lichteinstrahlrichtung (L) einfallende Licht durch das Lichtreflektorelement (1, 2) hindurchstrahlen kann.

8. Lichtreflektorelement nach Anspruch 7, **dadurch gekennzeichnet, dass** einer, mehrere oder alle der lichttransmittierenden Abschnitte (5) als Freiraum ausgebildet ist, in dem kein Material angeordnet ist.

9. Lichtreflektorelement nach einem der vorhergehenden Ansprüche, **dadurch gekennzeichnet, dass** die Reflektorflächen (4) in einem Abstand von dem Zentrum angeordnet sind, so dass um das Zentrum herum ein zentraler lichttransmittierender Abschnitt (6) gebildet ist, durch den das in Lichteinstrahlrichtung (L) einfallende Licht durch das Lichtreflektorelement (1, 2) hindurchstrahlen kann.

10. Lichtreflektorelement nach einem der vorhergehenden Ansprüche, **dadurch gekennzeichnet, dass** das Lichtreflektorelement (1, 2) als ein monolithisches Bauteil ausgebildet ist.

11. Lichtreflektorelement nach einem der vorhergehenden Ansprüche, **dadurch gekennzeichnet, dass** eine, mehrere oder alle der Reflektorflächen (4) jeweils als ebene Fläche ausgebildet ist.

12. Atomgerät, insbesondere Atominterferometer, mit wenigstens einer Laserlichtquelle und einer Atomfalle, die wenigstens eine erste Wechselwirkungszone (10) zum Kühlen gefangener Atome durch aus entgegengesetzten Richtungen auf die gefangenen Atome einstrahlendes Laserlicht der Laserlichtquelle hat, **dadurch gekennzeichnet, dass** das Atomgerät ein erstes Lichtreflektorelement (1) nach einem der vorhergehenden Ansprüche hat, wobei die Lichtabstrahlrichtung der Laserlichtquelle in der vordefinierten Lichteinstrahlrichtung (L) des ersten Lichtreflektorelements (1, 2) ausgerichtet ist, wobei die erste Wechselwirkungszone (10) wenigstens zum Teil durch das erste Lichtreflektorelement (1) gebildet ist.

13. Atomgerät nach Anspruch 12, **dadurch gekennzeichnet, dass** die Atomfalle als dreidimensional wirkende Atomfalle ausgebildet ist, wobei die vektoriellen Anteile des aus entgegengesetzten Richtungen auf die gefangenen Atome einstrahlenden Laserlichts in der ersten Wechselwirkungszone (10) alle Raumachsen umfassen.

14. Atomgerät nach Anspruch 12 oder 13, **dadurch gekennzeichnet, dass** das Atomgerät auf der von der Laserlichtquelle abgewandten Seite des ersten Lichtreflektorelements ohne einen entlang der Zentrumsachse (Z) verlaufenden Lichtstrahlpfad ausgebildet ist.

15. Atomgerät nach Anspruch 14, **dadurch gekennzeichnet, dass** das Atomgerät ohne einen in Lichteinstrahlrichtung (L) hinter dem ersten Lichtreflektorelement (1) angeordneten Spiegel (8) ausgebildet ist, durch den in Lichteinstrahlrichtung (L) einstrahlendes Licht entgegengesetzt zur Lichteinstrahlrichtung (L) zurückreflektiert wird.

16. Atomgerät nach einem der Ansprüche 12 bis 15, insbesondere Quanten-Gradiometer, **dadurch gekennzeichnet, dass** das Atomgerät wenigstens zwei voneinander beabstandete Wechselwirkungszonen (10) zum Kühlen gefangener Atome durch aus entgegengesetzten Richtungen auf die gefangenen Atome einstrahlendes Laserlicht hat, wobei das Atomgerät ein zweites Lichtreflektorelement (2) hat, das in Lichteinstrahlrichtung (L) hinter dem ersten Lichtreflektorelement (1) angeordnet ist, wobei eine zweite Wechselwirkungszone (10) wenigstens zum Teil durch das zweite Lichtreflektorelement (2) gebildet ist.
